(19) Europäisches Patentamt
European Patent Office
Office européen des brevets

(11) Numéro de publication: **0 153 233**
**B1**

(12) # FASCICULE DE BREVET EUROPÉEN

(45) Date de publication du fascicule du brevet: **22.07.87**

(51) Int. Cl.⁴: **B 01 J 37/20**

(21) Numéro de dépôt: **85400224.3**

(22) Date de dépôt: **12.02.85**

(54) **Procédé de présulfuration de catalyseur de traitement d'hydrocarbures.**

(30) Priorité: **13.02.84 FR 8402256**

(43) Date de publication de la demande: **28.08.85 Bulletin 85/35**

(45) Mention de la délivrance du brevet: **22.07.87 Bulletin 87/30**

(84) Etats contractants désignés: **BE DE GB IT LU NL**

(56) Documents cité:
**FR-A-2 127 092**
**FR-A-2 476 118**

(73) Titulaire: **EURECAT EUROPEENNE DE RETRAITEMENT DE CATALYSEURS, Quai Jean Jaurès B.P. 45, F-07800 La Voulte-sur-Rhône (FR)**

(72) Inventeur: **Berrebi, Georges, 17, rue Barnave, F-26500 Bourg-lès-Valence (FR)**

(74) Mandataire: **Colas des Francs, Jean, Institut Français du Pétrole 4, Avenue de Bois Préau, F-92502 Rueil-Malmaison (FR)**

**EP 0 153 233 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1987

**Description**

Il est souvent souhaitable de procéder à une sulfuration (généralement appelée "présulfuration") des métaux entrant dans la composition de certains catalyseurs de raffinage et/ou d'hydroconversion d'hydrocarbures soit lorsque ces catalyseurs sont neufs soit à l'issue de la régénération de ces catalyseurs avant de les réutiliser.

Une présulfuration des catalyseurs neufs ou régénérés est ainsi souhaitable pour l'emploi de ces catalyseurs dans les réactions de raffinage, par exemple les réactions de désulfuration ou hydrodésulfuration de diverses essences, par exemple des essences de craquage catalytique ou de craquage à la vapeur dont il convient, avant emploi, d'abaisser la teneur en soufre sans modifier l'indice d'octane de ces essences ou en le modifiant aussi peu que possible. De telles réactions de désulfuration, généralement effectuées en présence d'hydrogène, entre 200 et 400°C, sous une pression comprise entre par exemple 5 et 60 bars, avec une vitesse spatiale (exprimée en $m^3$ de charge injectée liquide par $m^3$ de catalyseur et par heure) comprise entre 0,5 et 15, avec une pression partielle d'hydrogène comprise entre 4 et 60 bars, la charge étant par exemple une essence distillant généralement entre 30 et 220° C et pouvant posséder un indice de brome compris entre 40 et 80 (g/100 g), contenant environ 15 à 45 %, en volume, d'oléfines (essentiellement des mooléfines avec des quantités minimes de dioléfines) et 15 à 25 % d'hydrocarbures aromatiques.

Le catalyseur utilisé pour ce type de désulfuration ou d'hydrodésulfuration renferme un support généralement non acide par exemple une alumine ou des mélanges d'alumine (brevet USP 4 334 982) ou tout autre support adéquat à base d'au moins un oxyde d'un métal ou de métalloïde (magnésie (USP 4 132 632, USP 4 140 626), silice, silicesalumines, silice-magnésies, les silice-fluorées, les alumines bores, les argiles, les charbons, les alumines fluorées) ce ou ces mélanges de supports pouvant au moins en partie se présenter sous forme amorphe ou sous forme cristallisée (zéolites) et le catalyseur renfermant en outre 0,2 à 30 % d'au moins un métal actif des groupes VI, VIII ou autre choisi par exemple dans le groupe constitué, par le cobalt, le molybdène, le nickel et le tungstène (USP 3 732 155 et 3 804 748). On utilise généralement un couple de deux de ces métaux, par exemple l'un des couples cobalt-molybdène, nickelmolybdène, cobalt-tungstène, tungstène-molybdène, cobalt-nickel, nickel-tungstène. On peut toujours à titre d'exemple utiliser un métal noble du groupe VIII de la famille du platine: Pt, Pd.... US 4 098 682.

Ainsi, avant d' être utilisé, le catalyseur, neuf ou régénéré, est soumis généralement dans l'art antérieur, à une sulfuration (présulfuration) effectuée dans le réacteur d'hydrodésulfuration. Cette sulfuration permet d'inclure dans le catalyseur, par exemple, 50 à 110 % environ des quantités stoechiométriques de soufre calculées sur les quantités de sulfure de formule, (selon les métaux présents), $Co_9S_8$, Mo $S_2$, $WS_2$ et $Ni_3$ $S_2$.

Cette sulfuration (présulfuration) est effectuée, dans l'art antérieur, à une température voisine ou plus élevée (ainsi supérieure à 180°C et plus particulièrement au-dessus de 250°C) par rapport à la température réactionnelle choisie pour la réaction d'hydrodésulfuration, pendant quelques heures, au moyen d'un mélange d'hydrogène sulfuré généralement dilué dans de l'hydrogène (proportion d'hydrogène sulfuré dans l'hydrogène de l'ordre de 0,5 à 5 % en volume) avec une vitesse spatiale adéquate de d'ordre, par exemple, de environ 1.000 à 3.000 litres de gaz dans les conditions normales de température et pression par litre de catalyseur et par heure (USP 4 334 982). La sulfuration (ou présulfuration) proprement dite peut être effectuée par palier de température (brevet français No 2 476 118). On peut utiliser divers agents de sulfuration, autres que l'hydrogène sulfuré ($H_2S$) et par exemple un composé de la famille des mercaptans, le sulfure de carbone ($CS_2$), des sulfures ou des disulfures, les composés thiophéniques et, de préférence le diméthylsulfure (DMS) et le diméthyldisulfure (DMDS).

Une sulfuration ou présulfuration de catalyseur régénéré est également souhaitable dans les réactions d'hydroreformage d'hydrocarbures (reforming notamment d'un naphta) et de production d'hydrocarbures aromatiques ("aromizing") par exemple la production de benzène, de toluène et de xylènes (ortho, méta ou para), soit à partir d'essences insaturées ou non (par exemple des essences de pyrolyse, de craquage, en particulier de steam cracking (craquage à la vapeur), ou de reformage catalytique) soit encore à partir d'hydrocarbures naphténiques capables par déshydrogénation de se transformer en hydrocarbures aromatiques.

Le catalyseur peut renfermer, par exemple, au moins un métal de la famille du platine, c'est-à-dire un métal noble tel que platine, palladium, iridium, rhodium, ruthénium, osmium déposé sur un support adéquat (alumine, silice, silice-alumine, alumines fluorées, silices fluorées, zéolite, etc... ou des mélanges de tels supports). La teneur totale en métaux nobles est comprise par exemple entre 0,1 et 5 % en poids par rapport au catalyseur. Le catalyseur également peut renfermer généralement au moins un halogène (chlore, fluor, etc...) avec une teneur pondérale de 0 à 15 %. Eventuellement encore, le catalyseur renferme au moins un métal promoteur choisi dans les groupes les plus divers de la classification périodique des éléments, la teneur pondérale en métal promoteur variant par exemple entre 0,1 et 15 %. On peut citer ainsi les métaux des groupes VIII, VI A et VI B, I B et II B, III A, IV A, V A et V B, IV B, III B, I A et I B ainsi que les métaux de la famille des lanthanides: on citera plus particulièrement, outre les métaux du groupe VIII nobles ou non nobles, le cuivre, l'argent, l'or, le germanium, l'étain, l'indium, le thallium, le manganèse, le rhénium, le tungstène, le molybdène, le niobium et le titane.

Pour ces réactions de reformage catalytique ou de production d'hydrocarbures aromatiques, la sulfuration du catalyseur neuf ou régénéré est accompagnée d'une réduction à l'hydrogène de catalyseur et s'effectue en tête du réacteur ou au voisinage de la tête du réacteur. La température dans la zone de sulfuration est imposée par la température à laquelle s'effectue la réduction, soit généralement entre 480 et 600° C dans la plupart des

cas. La difficulté de ce type de sulfuration sur le site, c'est-à-dire au voisinage des réacteurs a entrainé des mises en oeuvre de sulfuration souvent fastidieuses quoiqu'efficaces (USP 4 172 027).

L'agent de sulfuration utilisé est dans l'art antérieur, soit de l'hydrogène sulfuré pur ou dilué par de l'hydrogène ou par des hydrocarbures gazeux soit encore du diméthyldisulfure dilué par de l'hydrogène, au d'autres composés sulfurés tels que des sulfures d'alkyle ou des alkylmercaptans, dilués par de l'hydrogène. La pression utilisée est celle qui règne dans le réacteur de reforming ou de production d'hydrocarbures aromatiques, la durée de la réaction variant de quelques minutes à quelques jours selon les conditions opératoires choisies. (voir USP 4 172 027).

Une sulfuration (présulfuration) d'un catalyseur neuf ou régénéré convient encore, dans certains cas, pour la sulfuration partielle ou totale de catalyseur, également à base d'un des supports déjà cités et d'au moins un des métaux actifs déjà cités, utilisables dans des réactions, de conversions d'hydrocarbures telles que les réactions d'hydrogénation, de déshydrogénation, d'alkylation, d'hydroalkylation de déalkylation d'hydrodéalkylation, de déalkylation à la vapeur d'eau d'isomérisation et d'hydrodémétallisation des charges lourdes.

La sulfuration ou présulfuration, lorsqu'elle est nécessaire, peut s'opérer avantageusement selon l'une ou l'autre des techniques de l'art antérieur rappelées ci-dessus.

Les métaux des catalyseurs utilisés en raffinage, hydroraffinage ou en pétrochimie, qu'ils soient neufs ou régénérés sont le plus souvent sous forme oxydée, parfois sous forme métallique (pour certains métaux des catalyseurs de reforming notamment). Or, les métaux de ces catalyseurs, n'étant souvent actifs que sous forme sulfurée ou au moins partiellement sulfurée, il est donc nécessaire au raffineur ou au pétrochimiste d'opérer une sulfuration du catalyseur prealablement à sa mise en oeuvre.

Actuellement, la régénération des catalyseurs se fait de plus en plus chez un spécialiste de la régénération de catalyseurs, parfois loin de l'unité industrielle. Or, il parait raisonnable de penser à restituer au raffineur un produit prêt à l'emploi, ce que permet le procédé original et efficace selon l'invention dans lequel un composé sulfuré est incorporé dans la masse catalytique, lequel composé, provoquera la sulfuration ou la présulfuration du catalyseur lorsque, ultérieurement, dans la zone réactionnelle (zone de traitement de la charge) ou à proximité immédiate de la zone réactionnelle, le catalyseur sera mis en contact d'hydrogène. Bien entendu, l'incorporation dudit composé sulfuré peut, si on le désire, être effectuée à proximité de l'unité industrielle ou même sur le lieu de traitement de catalyseur; le procédé d'incorporation dudit composé sulfuré peut être effectué en hors site également sur un catalyseur neuf ou régénéré, avant sa mise en oeuvre.

D'une façon plus précise, le procédé de sulfuration du catalyseur est donc caractérisé par une étape préliminaire dite d'incorporation dans la masse catalytique, d'un composé sulfuré de nature particulière.

L'étape préliminaire d'introduction d'un composé sulfuré selon l'invention, qu'arbitrairement on appellera prétraitement"hors site" ou"ex situ", qu'elle soit effectuée à proximité du site de l'unité industrielle ou à distance plus ou moins grande géographiquement de l'unité industrielle (là où le catalyseur a été régénéré ou là où il a été fabriqué par exemple) ne se fait de toute façon plus au voisinage immédiat du réacteur (on écrira arbitrairement"in situ") c'est-à-dire en tête des réacteurs ou dans des zones plus ou moins en communication directe avec ces réacteurs, nécessitant d'opérer dans des conditions opératoires, (de température, pression ou autres), imposées au moins en partie par les conditions opéra toires des réacteurs eux mêmes ou des annexes de ces réacteurs (zone d'hydrogénation préalable du catalyseur par exemple).

En résumé, l'invention concerne un procédé, permettant, lorsque le catalyseur sera soumis dès son démarrage de préférence sur le site ("in situ") à la réaction classique d'activation en présence d'hydrogène, (généralment au-dessus de 100° C), de procéder ensuite grâce à la présence; d'hydrogène sur le site, à la sulfuration au taux requis, stoechiométrique ou non stoechiométrique, du ou des métaux actifs entrant dans la composition du catalyseur. Le procédé consiste à incorporer en l'absence d'hydrogène dans la porosité du catalyseur neuf ou régénéré du disulfure d'ammonium.

Conformément à l'invention, on imprègne le catalyseur "ex situ" en l'absence d'hydrogène avec une solution aqueuse de disulfure d'ammonium $S(NH_4)_2$ à une température comprise entre 0 et 50° C, de préference entre 10 et 35° C et par exemple à la température ambiante de façon a incorporer le degré adéquat de soufre dans la porosité du catalyseur, le traitement du catalyseur étant ensuite suivi d'un séchage de ce catalyseur à une température inférieure à 120°C et de préference comprise entre 95 et 115° C. Au-dessus de 120° C, on a constaté que le soufre était partiellement éliminé du catalyseur.

D'une façon plus particulière, et notamment lorsque l'on désire transformer en sulfures, la totalité des oxydes des métaux promoteurs que contient le catalyseur, le procédé consiste alors

(a) à imprégner le catalyseur à une température comprise entre 0 et 50° C à son volume d'imprégnation par une solution aqueuse de disulfure d'ammonium $S(NH_4)_2$, (de préference on opère entre 10 et 35°C),

(b) à sécher le catalyseur à une température inférieure à 120°C et de préference entre 95 et 115°C

(c) à imprégner à nouveau (entre 0 et 50°C, de préference entre 10 et 35°C) au moins une deuxième fois le catalyseur à son volume d'imprégnation ou à un volume inférieur, en fonction de la quantité de soufre à introduire dans le catalyseur, par une solution aqueuse de disulfure d'ammonium $S(NH_4)_2$,

(d) à sécher le catalyseur à une température inférieure à 130°C et de préférence entre 90 et 120°C et plus particulièrement au voisinage de 100°C.

Eventuellement, si nécessaire, pour le cas où des quantités importantes de soufre doivens être préintroduites dans le catalyseur, d'autres imprégnations du catalyseur à l'aide d'une solution de disulfure d'ammonium serons effectuées, chacun d'elles étant suivie d'un séchage à une temperature inférieure à 120°C.

Il peut ainsi être nécessaire d'effectuer plusieurs imprégnations parce que le volume poreux du catalyseur n'est pas suffisant pour adsorber lors de la première imprégnation toute la solution aqueuse théorique de sulfure d'ammonium renfermant la quantité, stoechiométrique ou non, de soufre que l'on se propose d'introduire dans la masse catalytique (une solution commerciale de sulfure d'ammonium renferme au maximum 20 % en poids de soufre et vouloir alors concentrer de telles solutions se traduirait par la décomposition du disulfure d'ammonium).

Le séchage qui suit la première imprégnation de disulfure d'ammonium est de preference effectué dans un gaz renfermant de l'oxygène moléculaire et notamment dans l'air, par exemple dans une étuve ventilée ou dans un sécheur en continu (à bande ou du type rotatif à titre d'exemple).

Le séchage qui suit la deuxième imprégnation, et les imprégnations suivantes si elles existent, est conduit de préférence en atmosphère inerte, par exemple sous azote. Cette opération peut se faire, à titre d'exemple, dans une chambre dont le chauffage est effectué au moyen d'une zone émettrice d'un rayonnement électromagnétique dont la longueur d'onde ou les longueurs d'onde (identiques ou différentes) sont comprises entre environ 0,38 μ m et 50 mm (380 à 5 x $10^8$ nanomètres), de préférence entre 0,5 μ m et 15 mm (500 à 1,5 x $10^8$ nanomètres) et plus particulièrement comprises entre 0,75 μm et 1,5 mm (750 à 0,5 x $10^8$ nanomètres). Ce type d'appareil est décrit dans la demande de brevet français No 83/04.350 du 15 mars 1983.

Diverses analyses du catalyseur traité selon l'invention permettent d'estimer que le disulfure d'ammonium utilisé s'est tramsformé en polysulfure d'ammomium de formule $[(NH_4) S...]_n$

A l'issue du traitement selon l'invention du catalyseur, on peut alors procéder, généralement"in situ" à une étape d'activation du catalyseur effectuée en présence d'hydrogène, la quantité requise de soufre se fixant alors, grâce à la présence d'hydrogène sur le ou les métaux entrant dans la composition dudit catalyseur.

Les inconvénients de la méthode classique de sulfuration "in situ" peuvent se resumer ainsi:

- température de travail trop élevée;
- utilisation de produits ($H_2S$, $CS_2$, DMS ou DMDS) malodorants et toxiques;
- risque de passivation du métal par réduction des oxydes avant leur sulfuration;
- impossibilité d'utiliser des charges contenant des oléfines pour éviter tout risque de polymérisation;
- difficulté d'utiliser des charges lourdes du type distillat sous vide ou résidus en raison de leur très faible pouvoir mouillant dû à leur grande viscosité;
- durée de la sulfuration (de plusieurs heures à plusieurs jours).

Les avantages du traitement préliminaire d'incorporation selon l'invention, d'un composé sulfuré, ex-situ sont par contre les suivants:

- température de travail relativement basse (60 à 200° C);
- au choix sulfuration complète et homogène du catalyseur ou sulfuration au taux exact demandé de sulfuration;
- pas de risque de provoquer une réduction des métaux oxydés car, selon l'invention, le traitement est effectué en l'absence d'hydrogène;
- manipulation aisée des catalyseurs rendus non pyrophoriques par addition d'eau et/ou d'essence légère;
- aucune mauvaise odeur et aucune toxicité;
- possibilité d'utiliser le catalyseur pour toutes méthodes de chargememt dense;
- économie de temps pour le raffineur et pour l'utilisateur des catalyseurs;
- activité maximum obtenue dès, l'alimentation du réacteur par la charge à désulfurer.

Les recherches effectuées dans le cadre de l'invention, ont conduit à développer une méthode de sulfuration"ex-situ"' de catalyseurs neufs ou régénérés, méthode qui a l'avantage de limiter de façon importante les infrastructures industrielles que réclamaient les techniques de présulfuration de l'art antérieur.

L'objet de cette invention est donc de conduire "ex-situ" la présulfuration des catalyseurs en incorporant toute la quantité nécessaire de soufre et seulement la quantité nécessaire de soufre demandée par l'utilisateur. Les catalyseurs sont donc livrés à la raffinerie ou à toute autre unité, ainsi préconditionnés pour être présulfurés.

Le raffineur, ou tout autre utilisateur, n'aura plus donc qu'à réactiver ce catalyseur en présence d'hydrogène à une température par exemple de 100 à 200°C pour un catalyseur de désulfuration, de 400 à 600° C environ, pour un catalyseur de reformage catalytique ou de production d'hydrocarbures aromatiques, afin de faire réagir le soufre sur les métaux contenus et démarrer aussitôt la réaction de raffinage ou de conversion d'hydrocarbures par injection de la charge à traiter.

Le procédé selon l'invention d'incorporation de soufre dans le catalyseur cst effectué en l'absence d'hydrogène et permet d'obtenir avec très grande précision le degré de sulfuration total ou partiel demandé par l'utilisateur. Cette incorporation de soufre est effectuée entre 0 et 50° C et de préférence entre 10 et 35° C et de préférence encore à la température ambiante.

La sulfuration selon l'invention permet ainsi de fixer sur le catalyseur, avec une grande précision, par dilution avec un solvant choisi, la quantité adéquate de soufre, quantité stoechiométrique par exemple pour des catalyseurs d'hydrodésulfuration et quantités non stoechiométriques mais critiques pour les catalyseurs de reforming ou de production d'hydrocarbures aromatiques, ces quantités critiques dépendant de la nature du métal ou de chacun des métaux entrant dans la composition du catalyseur. (On sait que le soufre est un poison des catalyseurs de reforming et qu'il y a donc lieu de maitriser parfaitement l'incorporation exacte souhaitée de soufre, ce que permet précisément le procédé de l'invention). Le présent procédé permet donc d'effectuer le taux de sulfuration conforme aux voeux de l'utilisateur du catalyseur.

Ainsi conformément à l'invention, on utilise à titre d'agent de sulfuration un composé sulfuré particulier qui va être bloqué dès sont introduction dans la masse catalytique. Ultérieurement, in situ, c'est-à-dire sur le site ou à proximité du site (sur lequel le catalyseur sera utilisé pour le traitememt de diverses charges), lors de la réaction classique d'activation, effectuée en présence d'hydrogène, l'agent de sulfuration introduit dans le catalyseur en quantités prédéterminées, sera capable de donner naissance à de l'hydrogène sulfuré lequel, en présence d'hydrogène, conduira au sulfure ou aux sulfures désirés du ou des métaux présents dans le catalyseur selon par exemple les réactions exothermiques (1) (2) et (3) suivantes pour ce qui concerne, à titre d'exemples, les sulfurations du molybdène, du cobalt et du nickel:

$$MoO_3 + 2\ H_2S + H_2 \longrightarrow MoS_2 + 3\ H_2O + \nearrow Q \qquad (1)$$

$$9\ CoO + 8\ H_2S + H_2 \longrightarrow Co_9S_8 + 9\ H_2O + \nearrow Q \qquad (2)$$

$$3\ NiO + 2\ H_2S + H_2 \longrightarrow Ni_3S_2 + 3\ H_2O + \nearrow Q \qquad (3)$$

Un autre avantage du procédé "ex situ" selon l'invention, est qu'il n'est pas besoin d'utiliser tout de suite de l'hydrogène, d'où l'inutilité ici de manipulation de ce gaz. De l'hydrogène, bien sûr, est nécessaire ensuite pour procéder à l'activation du catalyseur mais cette activation est réalisée sur le site lui-même puisque de toute façon, sur le site, l'emploi d'hydrogène est généralement nécessaire pour le traitement des coupes à traiter en présence du catalyseur présulfuré selon l'invention. On a noté à ce sujet, que l'activation d'un catalyseur présulfuré selon l'invention, donnait des résultats particulièrement avantageux si l'on ajoute à l'hydrogène, en volume, environ 0,1 à 1 % d'eau.

On ajoutera que l'opération d'activation est exécutée par le raffineur dans le réacteur où est placé la charge catalytique ainsi présulfurée.

Le lit peut être purgé à l'azote chaud pour éliminer toute présence d'oxygène gazeux pendant le stockage ou le transport du catalyseur. Dans le réacteur de la raffinerie, juste avant d'envoyer la charge à traiter pour démarrer l'activation, on peut faire alors passer un courant d'hydrogène par exemple entre 80 et 200° C, avec un débit horaire correspondant par exemple à 40 fois au moins le volume du lit catalytique.

La température va légèrement croître du fait de l'exothermie; le mélange gazeux qui se crée (le mélange $H_2$ + $H_2S$ produit) peut éventuellement être recyclé et peut-être utilisé pour limiter la montée en température. La température doit être de préférence supérieure à 100°C pour éviter toute condensation d'un liquide et inférieure à 200° C pour éviter tout risque de surchauffe.

Le suivi de la sulfuration se fait par le contrôle des températures, l'évolution de la teneur en $H_2S$, la quantité d'eau recueillie dans le gaz de purge après condensation (au ballon séparateur).

On rappelle ci-dessous les principaux avantages du procédé:

- travail de sulfuration s'effectuant à plus basse température;
- manipulation aisée des catalyseurs du fait que l'on n'a pas affaire à des sulfures malodorants; les polysulfures formés étant absolument sans odeur et ne présentant aucun caractère toxique;
- sulfuration plus homogène du lit catalytique;
- possibilité d'utiliser les infrastructures des usines de régénération ex-situ des catalyseurs;
- infrastructure industrielle réduite;
- plus de stockage de produit sulfuré difficilement utilisable comme le DMDS;
- temps d'immobilisation des réacteurs réduit;
- pas de risque de réduction des métaux qui entraîne les réactions d'hydrocraquage et non les réactions d'hydrodésulfuration désirées et généralement recherchées sélectivement.
- dans le cas d'hydroraffinage de coupes lourdes en vue de leur hydrocraquage ou de leur démétallisation, le raffineur est souvent obligé de présulfurer le catalyseur en utilisant une charge légère qui doit être ensuite stockée. Dans le cadre de cette invention, on n'aura plus besoin de procéder de manière aussi compliquée, puisque le catalyseur sera déjà sulfuré au moment d'envoyer la charge à traiter.

Un autre avantage du procédé est de pouvoir procéder à la présulfuration du catalyseur uniquement en présence d'une solution aqueuse. Il a récemment été proposé (FR-A-2 598 205) d'introduire des polysulfures organiques dans la porosité de la masse catalytique; or cette méthode présente l'inconvénient d'opérer la présulfuratiom en présence d'un solvant organique de type "white spirit" plus difficilement éliminable que l'eau en fin de procédé. Le présent procédé, en outre, présente l'avantage de pouvoir utiliser telle quelle la solution commerciale de sulfure d'ammonium. Une dilution de cette solution n' est pas nécessaire et une concentration de cette solution serait néfaste car le sulfure d'ammunium n'est alors pas suffisamment stable pour l'utilisation que l'on veut en faire.

On a également découvert, dans le cadre de la présente invention, un moyen pour accélérer ultérieurement lors de la réactivation du catalyseur par l'hydrogène, la transformation des oxydes des métaux actifs en sulfures de métaux.

Ce moyen consiste à opérer l'incorporation "ex situ" du sulfure d'ammonium dans la porosité du catalyseur, en présence d'au moins un additif possédant des propriétés de réducteur et qui est choisi dans le groupe

comstitué par les aldéhydes renfermant 4 à 14 atomes de carbone par molécule (et de préférence 5 à 12 atomes de carbone), les cétones ou polycétones renfermant 3 à 18 (et de préférence 5 à 12) atomes de carbone par molécule, les éthers renfermant 5 à 14 (de préférence 6 à 12) atomes de carbone par molécule, les alcools ou polyalcools renfermant 5 à 14 (et de préférence 6 à 12) atomes de carbone par molécule et les acides organiques ou polyacides renfermant 3 à 14 (et de préférence 6 à 12) atomes de carbone par molécule.

On utilisera, en poids, avantageusement 0,4 à 8 %, de préférence 0,8 à 4 % et plus particulièrement 0,9 à 3 % de l'additif ou des additifs choisis par rapport au poids de sulfure introduit sur le catalyseur.

Le ou les additifs peuvent être ajoutés, par exemple, avec la solution de disulfure d'ammonium, soit à l'état pur, soit dissous dans un solvant adéquat. Ce solvant peut être par exemple: une essence légère bouillant par exemple entre environ 60 et 95° C,

- une essence de type hexane bouillant entre 63 et 68° C environ,
- une essence de type F bouillant entre environ 100 et 160° C et contenant généralement 10 à 20 % d'hydrocarbures aromatiques, par exemple 15 %, (en volume),
- une essence de type"white spirit" bouillant entre environ 150 et 250° C et renfermant généralement 14 à 22 % d'hydrocarbures aromatiques, par exemple 17 %, en volume,
- toute coupe hydrocarbonée ou non, équivalente aux essences précédentes,

mais est de préférence un solvant soluble dans l'eau et par exemple dans un solvant tel que, par exemple, les alcools (méthanol éthanol, propanol etc...) ou d'autres liquides minéraux ou organiques connus pour dissoudre les aldéhydes, les cétones, les éthers les alcools, polyalcools, acides et polyacides utilisables selon la présente invention.

A titre d'aldéhydes, on citera par exemple le propanal, le butanal, l'éthyl-2 butanal, le phénoxy-2 propanal, le méthyl-3 butanal, le méthyl-2 pentanal, l'ethyl-2 hexanal, l'heptanal, l'octanal, le nonanal, le décanal, le dodécanal, le diméthyl acétal dodécanal etc...

A titre de cétones, on peut citer par exemple, l'acétone, la butanone-2, la méthyl-3 butanone-2, la pentanone-2, la pentanone-3, l'hexanone-2, la diméthyl-3, 3 hexanone-2, la diméthyl-3,4 hexanone-2, l'hexanone-3, la diméthyl-3,4 hexanone-3, la diméthyl-2, 5 hexanone-3, la diméthyl-4,4 hexanone-3, la méthyl-3 hexanone-2, la méthyl-4 hexanone-2, la méthyl-5 hexanone-2, la méthyl-4 hexanone-3, la méthyl-5 hexanone-3, la phényl-1 hexanone-1, l'heptanone-2, l'heptanone-3, l'heptanone-4, la diméthyl-2,6 heptanone-4, l'isopropyl heptanone-2, la méthyl-3 heptanone-2, la méthyl-6 heptanone-3, la méthyl-2 heptanone-4, la phenyl-1 heptanone-1, l'octanone-2, l'octanone-3, l'octanone-4, la méthyl-7 octanone-4, la nonanone-2, la nonanone-4, la nonanone-5, la décanone-2, la décanone-3, la décanone-4, la dodécanone-2, la phényl-1, dodécanone-1.

On peut utiliser des aldéhydes ou des cétones insaturés. On citera à titre d'exemples le buténal-2 l'hexénal-2, la pentène-3 one-2 la pentène-1 diméthyl-5 5 phényl-1 one-3, l'heptène-3 one-2, l'heptène-5 one-2 méthyl-6.

Comme polycétones, on peut utiliser par exemple, la butanedione-2,3 (diméthylglyoxal); la pentadione-2,3 ; la pentadione-2,4 (acetylacétone) ; la diméthyl-3,3 pentadione-2,4; l'éthyl-3, pentadione-2,4; l'hexanédione-2,5; la diphényl-1,6 hexanédione-1,6; la tétraméthyl-2,2,5,5 hexadione-3,4; l'heptanédione-2,4. l'heptanétrione-2,4,6; l'octanédione-2,3; l'octanédione-2,7 l'octanédione-3,6; l'octanédione-4,5; la tétraméthyl-2,2,7,7 octanédione-3,6; la diphényl-1,4 butène-2 dione-1,4 (dicétone éthylénique) etc...

A titre d'éther, on citera par exemple: le diméthyl éther, le diéthyl éther, le méthyl éthyl éther, le méthyl butyl éther, le méthyl t-butyl éther, le méthyl-2 éthyl hexyl éther, l'éthyl butyl éther, l'éthyl t-butyl éther, le di n-propyl éther, l'éther isoamylique, le furanne, le tétrahydrofuranne, le dioxanne, etc...

A titre d'alcool, on citera par exemple: le n-butanol, l'isobutanol, le pentanol-1, le pentanol-2, le méthyl-2-butanol-4, le méthyl-2 butanol-3, les hexanols, les méthyl-pentanols, les diméthyl-butanols, les heptanols, les octanols ou les alcool; amyliques $C_5H_{11}OH$.

A titre d'acide, on citera par exemple ceux qui correspondent aux aldéhydes, cétones et/ou alcools nommés ci-dessus. On peut citer l'acide lactique et l'acide citrique.

Le rôle de l'additif utilisé selon la présente invention, est, en raison d'un phénomène de synergie entre ledit additif et l'hydrogène mis en jeu, de pouvoir augmenter, au cours de l'étape de réduction, le degré de réduction des oxydes métalliques, de réduire ces oxydes beaucoup plus vite, de favoriser ainsi la cinétique du remplacement d'oxygène par le soufre et de favoriser en outre la dispersion des métaux dans le catalyseur.

En conséquence, le démarrage des réactions proprement dites de raffinage ou d'hydroconversion d'hydrocarbures se trouvera accéléré.

**Exemples**

Les tests effectués ont pour but de préparer une charge catalytique facilement manipulable, de réduire les coûts d'investissement pour obtenir un rendement économiquement viable, de pouvoir s'appuyer sur les installations de régénération ex-situ et faire faire une économie de temps au raffineur tout en facilitant la remise en oeuvre de la charge catalytique.

On rappelle que la base de la sulfuration d'un catalyseur conformément au procédé de l'invention, reste la même que dans l'art antérieur, à savoir l'utilisation d'un mélange d'hydrogène et d'hydrogène sulfuré:

$MoO_3 + 2\,H_2S + H_2 \rightarrow MoS_2 + 3\,H_2O + Q$ (1)

$9\,CoO + 8\,H_2S + H_2 \rightarrow Co_9S_8 + 9\,H_2O + Q$ (2)

$3\ NiO + 2\ H_2S + H_2 \rightarrow Ni_3S_2 + 3\ H_2O + Q$ (3)

La source de soufre pour produire $H_2S$ provient, comformément à l'invention d'un produit sulfuré particulier (sulfure d'ammonium) déjà présent dans le catalyseur sous la forme de polysulfure d'ammonium. Le principe de l'invention consiste à charger le catalyseur par le sulfure d'ammonium. Ceci se fait par adsorption de ce composé dans la porosité du catalyseur. Le catalyseur ainsi traité est activé ultérieurement dans le réacteur de la raffinerie par passage d'hydrogène chauffé par exemple entre 80 et 200° C. Le produit sulfuré libère $H_2S$, la sulfuration des oxydes s'opère alors conformément aux techniques connues rappelées ci-dessus.

Quelques essais ont été faits sur un catalyseur neuf KETJEN 165/1.5 E, calciné à 550° C, neuf ou régénér.

Trois agents de sulfuration ont été successivement testés:

- sulfure d'ammonium
- DMS: diméthylsulfure
- nBM: n butyl mercaptan.

La manipulation s'effectue en immergeant une quantité donnée de catalyseur dans un volume excessif de chacun des réactifs. L'imprégnation dure 1 heure.

Le catalyseur ainsi traité est ensuite porté pendant 1 heure à différentes températures: 80° C, 100° C et 150° C, pour étudier la tenue du produit à ces températures.

On obtient les résultats suivants:

| Echantillon | | DMS | nBM | DISULFURE D'AMMONIUM |
|---|---|---|---|---|
| 80° C | S | 0.88 | 3.12 | 10.60 |
| 100° C | S | - | 1.72 | 10.33 |
| 150° C | S | - | - | 3.49 |

Seul le catalyseur traité par le disulfure d'ammonium a une bonne tenue à l'élévation de température. Sa dissociation et donc son élimination intervient cependant à 150° C.

La poursuite des essais s'est donc effectuée avec un catalyseur traité par le disulfure d'ammonium qui, entre autres, présente l'avantage de ne pas être très odorant; à l'inverse du DMS et du nBM. Par ailleurs le disulfure d'ammonium ne présente absolument aucun caractère toxique, ce qui n'est évidemment pas le cas des mercaptans, voire des sulfures organiques.

On se propose d'introduire du sulfure d'ammonium dans le catalyseur KETJEN neuf ou régénéré dont le support est de l'alumine et qui renferme 15,4 % en poids d'oxyde de molybdène $MoO_3$ et 4,23 % en poids d'oxyde de cobalt CoO. Le but de l'opération est que, ultérieurement, sur le site où sera utilisé ce catalyseur, un prétraitement à l'hydrogène du catalyseur puisse transformer tout l'oxyde de molybdène en sulfure de molybdène $MoS_2$ et tout l'oxyde de cobalt en sulfure de cobalt de formule $Co_9S_8$. Le volume poreux du catalyseur est de 46 ml pour 100 grammes de catalyseur sec.

On peut calculer le poids de soufre (masse moléculaire: 32) qu' il convient d'introduire dans la porosité du catalyseur pour transformer la totalité des oxydes de molybdène et de cobalt en sulfures ($MoS_2$ et $Co_9S_8$) 15,4 g d'oxyde de molybdène (masse moléculaire de $MoO_3$: 144) dans 100 grammes de catalyseur correspondent à (voir réaction (1)page 17) $\frac{15,4}{144} \times 2 \times 32 = 6,844$ g de soufre dans ces 100 grammes de catalyseur.

De même, 4,23 g d'oxyde de cobalt (masse moléculaire: 75) dans 100 grammes de catalyseur correspondent à (voir réaction (2) page 17) $\frac{4,23}{75} \times \frac{8}{9} \times 32 = 1,604$ g de soufre dans ces 100 grammes de catalyseur.

Il est donc nécessaire d'incorporer au total 6 844 + 1,604 = 8 448g de soufre dans 100 grammes de catalyseur. Pour effectuer cette opération, on utilisera une solution aqueuse commerciale à 20 % de sulfure d'ammonium $(NH_4)_2S$ (Masse moléculaire: 68); 100 ml d'une telle solution renferment:

0,294 molécule de $(NH_4)_2S$ soit 0,294 atome de soufre soit 9,41 g de soufre. Puisqu'il faut introduire 8,448 g de soufre dans 100 g de catalyseur, il conviendra d'utiliser 89,77 ml de ladite solution commerciale pour 100 grammes de catalyseur, ce volume correspondant ainsi à environ deux fois le volume poreux du catalyseur (46 ml pour 100 g), donc à la nécessité d'effectuer ici deux imprégnations successives du catalyseur.

Au cours d'une première imprégnation, on introduit dans le catalyseur, à température ordinaire, 46 ml de la solution commerciale de sulfure d'ammonium. On sèche à 105° C pendant deux heures environ, sous air. On fait alors une deuxième imprégnation au moyen de 46 ml de la solution commerciale et on sèche à 100° C pendant deux heures environ, sous azote. Le catalyseur renferme à ce stade 8,6 grammes de soufre pour 100 grammes de catalyseur.

On a constaté qu'en effectuant les séchages à 150° C, le catalyseur ne renferme que 5,18 % de soufre et que le catalyseur renferme 5,51 % de soufre en effectuant les séchages à 200° C.

Diverses analyses conventionnelles permettent de conclure, que le soufre est présent dans le catalyseur sous la forme de polysulfure d'ammonium.

Les résultats obtenus sur le catalyseur KETJEN K 165/1,5E traité par le disulfure d'ammonium sont les suivants:

. Perte au feu à 500° C (P.A.F. à 500° C)
- avant traitement: 0.81 %
- après traitement: azote: 26,76 %

. Analyse carbone et soufre sur le catalyseur imprégné.

| | avant traitement | après traitement sous azote |
|---|---|---|
| S % | 0.38 | 8.76 |
| C % | 0.08 | 0.08 |

Au vu de ces résultats (en particulier les valeurs des P.A.F. à 500° C), on peut dire que le catalyseur est en moyenne imprégné à 20 % de disulfure d'ammonium soit 8,45 % de soufre en poids de catalyseur sec et oxydé, ce qui correspond au but recherché.

L' activation du catalyseur précédemment traité, est effectuée en faisant passer un courant d'hydrogène à 150° C au travers d'un lit de catalyseur imprégné de polysulfure (sous 30 bars).

Quand le lit a atteint 130° C, le réaction démarre et la température monte jusqu'à 150° C environ.

Le catalyseur devient noir, ceci est dû aux sulfures métalliques formés.

L' analyse du catalyseur sulfuré donne comme valeur en soufre 8,50 %.

On répète les essais précédents comme indiqués précédemment. Toutefois ici, on ajoute aux 46 ml de la solution commerciale de disulfure d'ammonium 0,90 ml de dicétone

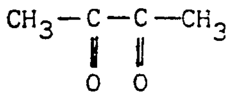

ou 0,95 ml d'acétylacétone.

A l'issue de l'activation du catalyseur, l'analyse du catalyseur sulfuré donne également comme valeur en soufre 8,50 %.

Mais on constatera ultérieurement que la stabilité des activités est améliorée notamment dans les tests de longue durée (plusieurs centaines d'heures dans les unités pilote).

**Revendications**

1. Procédé de traitement d'un catalyseur neuf ou régénéré, renfermant un support à base d'au moins un oxyde d'un métal ou d'un métalloïde et au moins un métal actif, réalisé en l'absence d'hydrogène et consistant à traiter ledit catalyseur avec une solution aqueuse de disulfure d'ammonium à une température comprise entre 0 et 50° C.

2. Procédé selon la revendication 1, de traitement d'un catalyseur neuf ou régénéré renfermant un support à base d'au moins un oxyde d'un métal ou d'un métalloïde et au moins un métal actif, en vue d'effectuer ultérieurement en présence d' hydrogène, la sulfuration totale ou partielle, c'est-à-dire en quantité stoechiométrique ou non, du ou des métaux dits actifs entrant dans la composition du catalyseur, ledit procédé consistant (a) à imprégner "ex-situ" ledit catalyseur neuf ou régénéré en l'absence d'hydrogène avec une solution aqueuse de disulfure d'ammonium à une température comprise entre 0 et 50°C et (b) à sécher la masse catalytique à une température inférieure à 120° C.

3. Procédé selon la revendication 2 dans lequel on opère entre 10 et 35° C dans l'étape (a) et dans lequel la masse catalytique, à l'étape (b) est séchée sous atmosphère d'un gaz renfermant de l'oxygène moléculaire à une température comprise entre 95 et 115° C.

4. Procédé selon l'une des revendications 1 et 2 de traitement d'un catalyseur neuf ou régénéré renfermant un support à base d'au moins un oxyde d'un métal ou d'un métalloïde et au moins un métal actif, ledit procédé consistant

(a) à imprégner le catalyseur à une température comprise entre 0 et 50°C à son volume d'imprégnation par une solution aqueuse dde disulfure d'ammonium,

(b) à sécher le catalyseur à une température inférieure à 120°

(c) à imprégner à nouveau au moins une deuxième fois le catalyseur à son volume d'imprégnation ou à un volume inférieur, par une solution aqueuse de disulfure d'ammonium et

(d) à sécher le catalyseur à une température inférieure à 130°C.

5. Procédé selon la revendication 4 dans lequel on opère entre 10 et 35°C dans les étapes (a) et (c), à une température comprise entre 95 et 115°C dans l'étape (b) et à une température comprise entre 90 et 120°C dans l'étape (d), l'étape (b) étant effectuée sous atmosphère d'un gaz renfermant de l'oxygène moléculaire et l'étape (d) étant effectuée sous atmosphère inerte.

6. Procédé selon l'une des revendications 1 à 5 à l'issue duquel, du soufre est présent dans la masse catalytique sous la forme de polysulfure d'ammonium.

7. Procédé de traitement d'un catalyseur neuf ou régénéré renfermant un support à base d'au moins un oxyde d'un métal ou d'un métalloïde et au moins un métal actif, caracterisé en ce que au cours d'une première

étape, réalisée "ex-situ" conformément à l'une des revendications 1 à 6, et en ce que au cours d'une deuxième étape dite réaction d'activation, on traite le catalyseur en présence d'hydrogène pour fixer la quantité requise de soufre sur le ou les métaux actif(s) entrant dans la composition dudit catalyseur.

8. Procédé selon la revendication 7 dans lequel ladite réaction d'activation est effectuée "in-situ".

9. Procédé selon l'une des revendications 1 à 8 dans lequel en outre, au cours de l'imprégnation du disulfure d'ammonium dans le catalyseur, on introduit également, en poids par rapport au soufre introduit dans le catalyseur, de 0,4 à 8 % d'au moins un additif choisi dans le groupe constitué par les aldéhydes renfermant 4 à 14 atomes de carbone par molécule, les cétones ou polycétones renfermant 3 à 18 atomes de carbone par molécule, les éthers renfermant 5 à 14 atomes de carbone par molécule, les alcools ou polyalcools renfermant 5 à 14 atomes de carbone par molécule et les acides ou les polyacides organiques renfermant 3 à 14 atomes de carbone par molécule.

10. Procédé selon la revendication 9 dans lequel le poids d'additif(s) utilisé(s) représente 0,8 à 4 % par rapport au poids de soufre introduit dans le catalyseur.

11. Procédé selon l'une des revendications 9 et 10 dans lequel l'additif est choisi dans le: groupe constitué par l'acétylacétone, la dicétone, l'acide lactique et l'acide citrique.

**Patentansprüche**

1. Verfahren zur Behandlung eines neuen oder regenerierten Katalysators, der einen Träger auf der Basis wenigstens eines Oxids eines Metalls oder eines Metalloids bzw. Nicht-Metalls und wenigstens eines aktiven Metalls umfaßt, in Abwesenheit von Wasserstoff durchgeführt und darin besteht diesen Katalysator mit einer wässrigen Lösung von Ammoniumdisulfid bei einer Temperatur zwischen 0 und 50° C zu behandeln.

2. Verfahren nach Anspruch 1 zur Behandlung eines neuen oder regenerierten Katalysators, der einen Träger auf der Basis wenigstens eines Oxids eines Metalls oder eines Nicht-Metalls und wenigstens eines aktiven Metalls umfaßt, um schließlich in Anwesenheit von Wasserstoff die Gesamtsulfuriering oder partielle Sulfurierung, d.h. in gegebenenfalls stoechometrischer Menge, des oder der sog. aktiven Metalle vorzunehmen, die Bestandteile der Katalysatorzusammensetzung sind, wobei das Verfahren darin besteht,

(a) "ex-situ" diesen neuen oder regenerierten Katalysator in Abwesenheit von Wasserstoff mit einer wässrigen Lösung von Ammoniumdisulfid bei einer Temperatur zwischen 0 und 50° C zu imprägnieren und

(b) die katalytische Masse bei einer Temperatur unter 120° C zu trocknen.

3. Verfahren nach Anspruch 2, dadurch gekennzeichnet, daß man zwischen 10 und 30° C in der Stufe (a) arbeitet und wobei die katalytische Masse in der Stufe (b) unter der Atmosphäre eines Gases getrocknet wird, welches molekularen Wasserstoff bei einer Temperatur zwischen 95 und 115° C enthält.

4. Verfahren nach einem der Ansprüche 1 und 2 zur Behandlung eines neuen oder regenerierten Katalysators, der einen Träger auf der Basis wenigstens eines Oxids eines Metalls oder Nicht-Metalls und wenigstens eines aktiven Metalls enthält, wobei das Verfahren darin besteht,

(a) den Katalysator bei einer Temperatur zwischen 0 und 50° C bei seinem Imprägnierungsvolumen mit einer wässrigen Lösung von Ammoniumdisulfid zu imprägnieren,

(b) den Katalysator bei einer Temperatur unter 120° C zu trocknen,

(c) von neuem wenigstens einen zweiten Teil des Katalysators bei seinem Imprägnierungsvolumen oder bei einem kleineren Volumen durch eine wässrige Lösung von Ammoniumdisulfid zu imprägnieren und

(d) den Katalysator bei einer Temperatur unter 130° C zu trocknen.

5. Verfahren nach Anspruch 4, dadurch gekennzeichnet, daß man zwischen 10 und 35° C in den Stufen (a) und (c) bei einer Temperatur zwischen 95 und 115° C in Stufe (b) und bei einer Temperatur zwischen 90 und 120° C in Stufe (d) arbeitet, wobei die Stufe (b) unter einer Atmosphäre eines Gases durchgeführt wird, das molekularen Sauerstoff enthält und die Stufe (d) unter inerter Atmosphäre durchgeführt wird.

6. Verfahren nach einem der Ansprüche 1 bis 5, bei dessen Abschluß Schwefel in der katalytischen Masse in Form von Ammoniumpolysulfid vorhanden ist.

7. Verfahren zur Behandlung eines neuen oder regenerierten Katalysators, der einen Träger auf der Basis wenigstens eines Oxids eines Metalls oder eines Nicht-Metalls und wenigstens ein aktives Metall enhält, dadurch gekennzeichnet, daß während einer ersten "ex-situ" nach einem der Ansprüche 1 bis 6 ausgeführten Stufe und während einer zweiten Stufe, der sog. Aktivierungsstufe, man den Katalysator in Anwensenheit von Wasserstoff behandelt, um die geforderte Schwefelmenge auf dem oder den aktiven Metallen zu fixieren, die Bestandteil dieser Katalysatorzusammensetzung sind.

8. Verfahren nach Anspruch 7, dadurch gekennzeichnet, daß die Aktivierungsreaktion "in-situ" durchgeführt wird.

9. Verfahren nach einem der Ansprüche 1 bis 8, dadurch gekennzeichnet, daß im übrigen während des Imprägnierens des Ammoniumdisulfids im Katalysator man ebenfalls, bezogen auf den im Katalysator vorhandenen Schwefel, 0,4 bis 8 Gew.-% wenigstens eines Additivs zugibt, das gewählt ist aus der Gruppe, die gebildet wird durch die Aldehyde, welche 4 bis 14 Kohlenstoffatome pro Molekül enthalten, die Ketone oder Polyketone, die 3 bis 18 Kohlenstoffatome pro Molekül enthalten, die Äther, welche 5 bis 14 Kohlenstoffatome pro Molekül enthalten, die Alkohole oder Polyalkohole, welche 5 bis 14 Kohlenstoffatome pro Molekül enthalten sowie die gegebenenfalls organischen Säuren oder Polysäuren, die 3 bis 14 Kohlenstoffatome pro

Molekül enthalten.

10. Verfahren nach Anspruch 9, dadurch gekennzeichnet, daß das Gewicht des oder der verwendeten Additive 0,8 bis 4 Gew.-%, bezogen auf den im Katalysator vorhandenen Schwefel, ausmacht.

11. Verfahren nach einem der Ansprüche 9 und 10, dadurch gekennzeichnet, daß das Additiv gewählt ist aus der Gruppe, die besteht aus Acetylaceton, Diketon, Milchsäure und Zitronensäure.

## Claims

1. A process for the treatment of a fresh or of a regenerated catalyst, comprising a carrier whose main constituent is at least one metal or metalloid oxide and at least one active metal, conducted in the absence of hydrogen and consisting of treating said catalyst with an aqueous solution of ammonium disulfide at a temperature from 0 to 50° C.

2. A process according to claim 1, for the treatment of a fresh or of a regenerated catalyst, comprising a carrier whose main constituent is at least one metal or metalloid oxide and at least one active metal, in order to proceed subsequently to a complete or partial sulfuration, i.e. with stoichiometrical or non stoichiometrical amounts, of the one or more active metals of the catalyst, said process comprising the steps of (a) impregnating "ex situ" said fresh or said regenerated catalyst, in the absence of hydrogen, with an aqueous solution of ammonium disulfide, at a temperature from 0 to 50°C, and (b) drying the catalyst mass at a temperature lower than 120° C.

3. A process according to claim 2, wherein the operation is conducted in the range from 10 to 35° C in step (a) and wherein the catalyst mass, in step (b), is dried under an atmosphere of molecular oxygen-containing gas, at a temperature from 95 to 115° C.

4. A process according to one of claims 1 and 2, for the treatment of a fresh or of a regenerated catalyst containing a carrier whose main constituent is at least one metal or metalloid oxide, and at least one active metal, said process comprising the steps of:

(a) impregnating the catalyst at a temperature from 0 to 50° C to its impregnation volume, by means of an ammonium disulfide aqueous solution,

(b) drying the catalyst at a temperature lower than 120° C,

(c) again impregnating, at least a second time, the catalyst to its impregnation volume or to a lower volume, by means of ammonium disulfide aqueous solution, and

(d) drying the catalyst at a temperature lower than 130° C.

5. A process according to claim 4, conducted at a temperature from 10 to 35° C in steps (a) and (c), at a temperature from 95 to 115° C in step (b) and at a temperature from 90 to 120° C in step (d), step (b) being performed under an atmosphere of molecular oxygen-containing gas and step (d) performed in inert atmosphere.

6. A process according to one of claims 1 to 5, at the end of which sulfur is present in the catalyst mass as ammonium polysulfide.

7. A process for the treatment of a fresh or of a regenerated catalyst, comprising a carrier whose main constituent is at least one metal or metalloid oxide and at least one active metal, characterized in that, during a first step, performed "ex situ" in accordance with one of claims 1 to 6, and during a second step, called of activation reaction, the catalyst is treated in the presence of hydrogen to fix the required sulfur amount onto the one or more active metal(s) included in the catalyst composition.

8. A process according to claim 7, wherein said activation reaction is performed "in situ".

9. A process according to one of claims 1 to 8, further comprising the introduction, during the impregnation of the catalyst with ammonium disulfide, of at least one additive, in a proportion from 0.4 to 8 % by weight with respect to the sulfur introduced in the catalyst, said additive being selected from the group consisting of aldehydes containing 4 to 14 carbon atoms per molecule, ketones or polyketones containing 3 to 18 carbon atoms per molecule, ethers containing 5 to 14 carbon atoms per molecule, alcohols or polyalcohols containing 5 to 14 carbon atoms per molecule and organic acids or polyacids containing 3 to 14 carbon atoms per molecule.

10. A process according to claim 9, wherein the additive is used in a proportion from 0.8 to 4 % with respect to the weight of sulfur introduced in the catalyst.

11. A process according to one of claims 9 and 10, wherein the additive is selected from the group consisting of acetylacetone, diketone, lactic acid and citric acid.